Europäisches Patentamt

(19) European Patent Office

Office européen des brevets

(11) Publication number : **0 397 334 B1**

(12) **EUROPEAN PATENT SPECIFICATION**

(45) Date of publication of patent specification :
26.10.94 Bulletin 94/43

(51) Int. Cl.⁵ : **H05B 41/24**

(21) Application number : **90304275.2**

(22) Date of filing : **20.04.90**

(54) **A method of operating an arc discharge lamp.**

(30) Priority : **26.04.89 GB 8909484**

(43) Date of publication of application :
**14.11.90 Bulletin 90/46**

(45) Publication of the grant of the patent :
**26.10.94 Bulletin 94/43**

(84) Designated Contracting States :
**AT BE CH DE DK ES FR GB GR IT LI LU NL SE**

(56) References cited :
**EP-A- 0 066 927**
**EP-A- 0 291 223**
**US-A- 3 890 537**

(73) Proprietor : **THORN EMI plc**
**4 Tenterden Street**
**London W1R 9AH (GB)**

(72) Inventor : **Clifford, Ian Harry**
**101 Victoria Street,**
**Osborne Mews**
**Slough, Berkshire SL1 1PR (GB)**
Inventor : **Mascarenhas, Everard Joseph**
**Philip**
**75 Pinewood Avenue**
**Hillingdon, Midlesex, UB8 4LP (GB)**
Inventor : **Mattingley-scott, Mark Alastair**
**37 Eastbourne Road**
**Brenford, Middlesex (GB)**
Inventor : **Patel, Santosh**
**92 Rothschild Road**
**London W4 5NS (GB)**

(74) Representative : **Hurst, Richard Arthur**
**Alexander et al**
**THORN EMI Patents Limited,**
**Central Research Laboratories,**
**Dawley Road**
**Hayes, Middlesex UB3 1HH (GB)**

EP 0 397 334 B1

## Description

This invention relates to a method of operating an arc discharge lamp and to a power supply for putting the method into effect.

An arc discharge lamp is usually driven at 50Hz. However, there are advantages in driving an arc discharge lamp at a frequency well above the flicker threshold of the human eye as this also facilitates an overall reduction in component size associated with the ballast, and typically a frequency in excess of 15kHz would be used. It is well known, however, that an arc tube containing a fill at high pressure can support radial and azimuthal acoustic waves at these relatively high frequencies and this phenomenon, which is commonly referred to as "acoustic resonance", can occur whenever power is supplied to the lamp at, or about, certain resonant fequencies $F_M$ which are related to lamp geometry by the expression

$$F_M = \frac{MV}{2L}$$

where    M is an integer representing harmonic number,
         L is related to the length of the arc tube,
and      V is the acoustic velocity in the arc tube.

In general, an arc discharge lamp may exhibit many such resonant frequencies and since M, L and V may all depend on the operating characteristics, dimensions and geometry of the lamp, these frequencies can vary over the running time, and lifetime of the lamp. The theoretical analysis is even more complicated for arc discharge lamps, such as the Arcstream metal halide lamp, which have a substantially spherical geometry.

Acoustic resonance has proved to be particularly problematical since the acoustic wave may give rise to an instability in the discharge arc, causing it to stretch or gyrate and invariably to extinguish. In some cases damage may be caused to the arc tube.

The problem of acoustic resonance has taxed workers in the field for many years. Solutions which have been proposed include shaping the supply waveform, specially configuring the arc tube and placing quartz wool inside the arc tube. None of these solutions appears to have been altogether successful and, in some cases, the proposed solution could conflict with other lamp design considerations such as lamp life, efficacy etc.

H. Lange in a paper 'Lamps and Circuits' at the Third International Symposium on the Science and Technology of Light Sources, Toulouse, France 1983, discloses the general concept of a circuit offering variable frequencies which quickly pass over the resonance frequency. A constant frequency is generated which is swept either to periodical or statistical changes of the supply voltage by phase of (sic) frequency modulation. Thus the critical frequencies are passed over quickly and resonance cannot occur. However, the problem with this concept has been discovering a variation in frequency which can be generated and which allows a stable arc to be produced.

Our copending European patent application published under No. EP-A-0291223, from which the preambles of present Claims 1 and 7 have been derived, (THORN EMI) discloses and claims a power supply for an arc discharge lamp, the power supply comprising a drive circuit arranged to supply voltage to the lamp and control means for causing a characteristic of said voltage to vary with time in accordance with a pseudo random sequence in order to reduce, or eliminate, acoustic resonance.

Furthermore US-A-3,890,537 discloses a solid state chopper ballast for gaseous discharge lamps wherein automatic sweeping of the chopping frequency is achieved in order to avoid acoustic resonance effects.

It is an object of the present invention to provide an improved method of operating an arc discharge lamp and a power supply suitable for use in such a method.

According to a first aspect of the present invention there is provided a method of operating an arc discharge lamp comprising: supplying voltage to the lamp at a succession of (n+1) frequencies, wherein (n+1) is at least four, within a frequency bandwidth, the frequencies being $f_o$......$f_i$, $f_{i+1}$.......$f_n$ with $f_{(i+1)} > f_i$, characterised in that the succession follows the predetermined order $f_o$, $f_{(m+1)}$, $f_1$, $f_{(m+2)}$,......, $f_{(m-2)}$, $f_{(n-2)}$, $f_{(m-1)}$, $f_{(n-1)}$, $f_m$, $f_n$ where m=n/2 if n is even and m=(n+1)/2 if n is odd, thereby maximising the change between the frequencies of the succession and wherein the duration for which voltage is supplied at any one of the (n+1) frequencies of the succession is less than the time constant for setting up acoustic resonance at that frequency.

The inventors selected the algorithm on which the method according to the present invention is based because this was found to optimise the effect of varying the frequency to reduce or eliminate acoustic resonance. The inventors believe that the improved performance of arc discharge lamps operated by this method in contrast to arc discharge lamps operated by the power supply of EP-A-0291223 is due to the different algorithms by which the frequency is varied. In EP-A-0291223, the frequency, or other characteristic of the supplied voltage, is varied in accordance with a pseudo-random sequence and so it is equally probable that the frequency change in consecutive time periods will be minimal as that the frequency change in consecutive time periods

2

will be maximised. Thus there is still a risk with the power supply of EP-A-0291223 that the frequency change in consecutive time periods will be insufficient to prevent the damaging effects of acoustic resonance. In contrast, the present method uses a predetermined order of frequency variation but the change in frequency between consecutive periods in time is maximised, so reducing the risk that acoustic resonance will be set up at any frequency or range of frequencies. The time constant for setting up acoustic resonance at any particular frequency is a characteristic for a given type and shape of lamp. It can be determined experimentally for any given type and shape of lamp whether any time period for which a particular frequency is supplied is greater or less than the time constant for setting up acoustic resonance at that particular frequency.

Preferably the succession of (n+1) frequencies is such that the time separation between periods in which the voltage is supplied at a given frequency is greater than the time constant for setting up acoustic resonance at that frequency.

In a preferred method, the bandwidth has a magnitude of 5 kHz or less, preferably 2 kHz or less. Variation in frequency of the supplied voltage results in power modulation which, of itself, can excite acoustic resonance. Limiting the bandwidth to such a narrow range significantly reduces this power modulation and this has been shown to help sustain a stable arc.

Advantageously, the method further comprises sensing the current input to the lamp. This can be used to assist in starting of the lamp. Alternatively or additionally, the midpoint of the operating range of the bandwidth is controlled thereby to provide control of the current input to the lamp during normal operation of the lamp. Accordingly, as the voltage required across the lamp increases with age, the lamp current can be adjusted to maintain a constant power output with age.

According to a second aspect of the present invention there is provided a power supply for an arc discharge lamp comprising:

a drive circuit for supplying voltage to the lamp,

and means for providing said voltage at a succession of (n+1) frequencies, wherein (n+1) is at least four, within a frequency bandwidth, the frequencies being $f_o$......$f_1$, $f_{i+1}$......$f_n$ with $f_{(i+1)} > f_i$, characterised in that the succession follows the predetermined order $f_o$, $f_{(m+1)}$, $f_1$, $f_{(m+2)}$,......., $f_{(m-2)}$, $f_{(n-2)}$, $f_{(m-1)}$, $f_{(n-1)}$, $f_m$, $f_n$ where m=n/2 if n is even and m=(n+1)/2 if n is odd, thereby maximising the change between the frequencies of the succession and wherein the duration for which voltage is supplied at any one of the (n+1) frequencies of the succession is less than the time constant for setting up acoustic resonance at that frequency.

A power supply provided in accordance with this aspect of the present invention is suitable for putting into effect the method of the present invention.

Embodiments of the present invention will now be described, by way of example only, and with reference to the accompanying drawings of which:

Figure 1 shows a power supply including power components of a drive circuit having a half-bridge configuration;

Figure 2 shows the drive circuit of Figure 1 in greater detail;

Figures 3 and 4 show schematically different circuits for generating a variation in frequency in the power supply of Figure 1;

Figure 5 shows a starting circuit for use in the power supply of Figure 1;

and Figure 6 shows an acoustic instability spectrum for an Arcstream metal halide HID lamp.

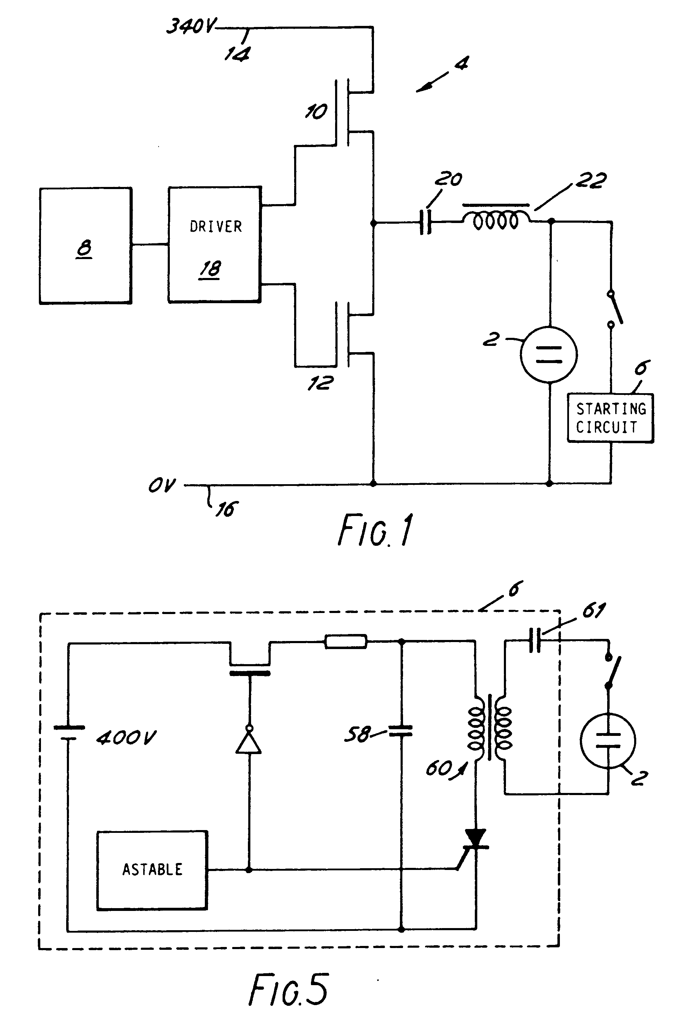

Figure 1 illustrates a power supply which is designed to drive a high pressure arc discharge lamp (eg a metal halide HID lamp) represented generally at 2. The supply comprises three separate parts, power components (referenced generally at 4), a starting circuit 6 and a low voltage logic circuit 8.

The power components 4 are shown schematically as comprising two individually energisable, solid state switching devices, in the form of two MOSFETS 10, 12 connected in series across D.C. supply rails 14, 16 in a half-bridge inverter configuration. The switching devices are controlled by a driver 18 which is arranged to render the switching devices 10, 12 conductive and non-conductive in antiphase at a frequency or succession of frequencies determined by the logic circuit 8. Thus, in operation, the two switching devices 10, 12 are effective to couple the supply rails 14, 16 alternately to one end only of the lamp 2. The power components 4 further comprise an LC ballast circuit consisting of a 0.47μF capacitor 20 to remove the d.c. level and a main ballast inductor 22 of 680μH.

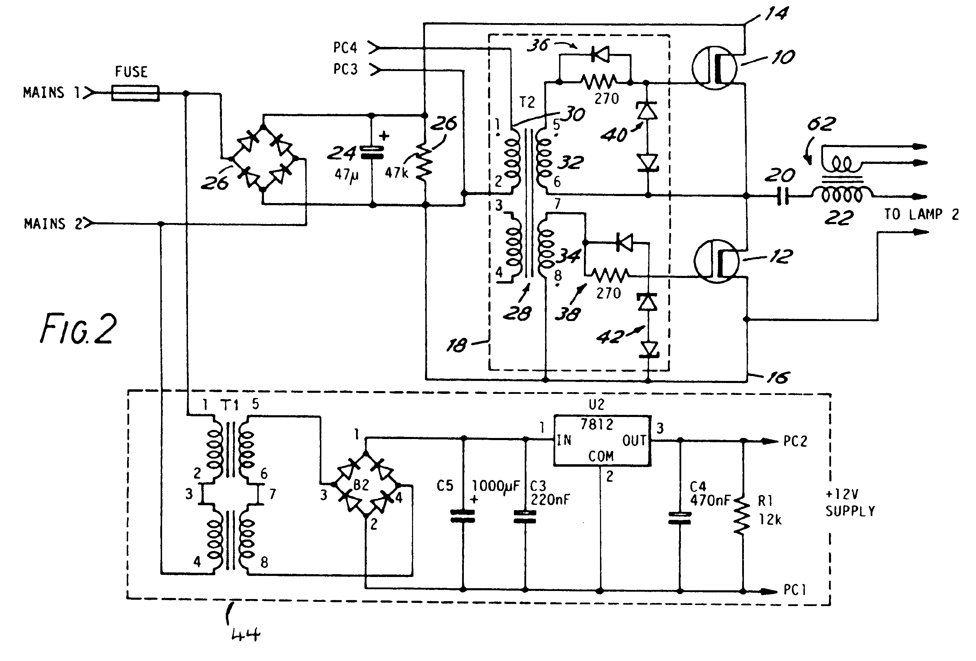

The power components 4, in particularly the driver 18, are shown in greater detail in Figure 2. In this embodiment, a 47 μF electrolytic capacitor 24 connected across a mains-fed full-bridge rectifier 26 generates 340V DC across the supply rails 14, 16 of Figure 1. Alternatively, a preregulator circuit may be used to overcome the problem of harmonics. A 47kΩ resistor 26 is connected across the capacitor 24 to discharge it when the mains supply is switched off. The driver 18 comprises a step-up transformer 28 which has a primary and two secondary windings with a turns ratio of 1:2:2. The primary winding 30 is driven from an A.C. coupled push-pull circuit (not shown) in the logic circuit 8. The two secondary windings 32, 34 are respectively connected between the source and drain of each of the MOSFETs 10, 12. A parallel diode and 220Ω resistor combination 36, 38 is placed in series with the secondary winding 32, 34 and the gate of each MOSFET to reduce the gate charging current and gate discharge time. Back-to-back Zener diode combinations 40, 42 are placed between the source and gate of each MOSFET 10, 12 to protect the gate from over-voltage.

Figure 2 also shows a conventional transformer coupled circuit (referenced generally at 44) fed from the mains supply and used to derive a low voltage power supply (12V, 0.5A dc) to drive the logic circuit 8.

During normal operation of the lamp 2, the logic circuit 8 generates a succession of frequencies within a bandwidth - so-called 'spot' or 'hop' frequencies. Voltage is supplied at a particular frequency for a period and the order of the succession of frequencies is predetermined such that the change in frequency between consecutive periods is maximised.

One algorithm for generating a predetermined order of frequencies as defined in the previous paragraph is termed the rotating diameter sequence. The frequency is varied in a bandwidth of frequency $f_o$ to $f_n$, the bandwidth consisting of n+1 frequencies $f_o$, ... $f_i$, $f_{i+1}$,..$f_n$ with $f_{i+1} > f_i$. The algorithm is:

$f_o$, $f_{(m+1)}$, $f_i$, $f_{(m+2)}$,..$f_{(m-2)}$, $f_{(n-2)}$, $f_{(m-1)}$, $f_{(n-1)}$, $f_m$, $f_n$

where m $= n/2$ if n is even
$= (n\pm1)/2$ if n is odd.

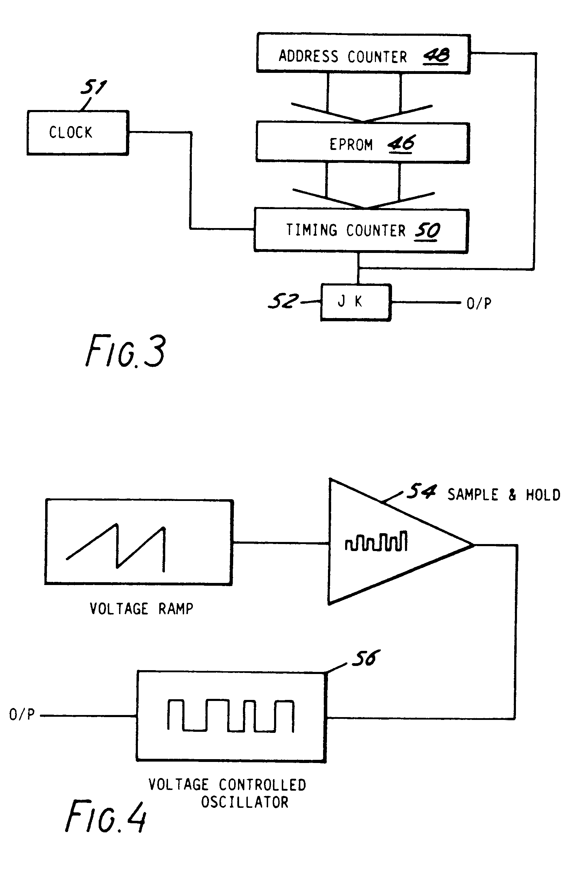

The rotating diameter sequence can be produced by a circuit as shown schematically in Figure 3. Numbers $N_i$ corresponding to the frequencies $f_o$, .. $f_n$ are calculated from the equation.

$$N_i = 256 - \frac{f_{clock}}{2f_i}$$

In one specific example used, $f_{clock}$ = 10MHz and the numbers $N_i$ were stored in the following order:
200, 213, 201, 214, . . 223, 211, 224, 212, 225
with
$N_o = 200$
$N_n = 225$

These numbers $N_i$ are stored in an EPROM (erasable-programmable ROM) 46 in the predetermined order. The EPROM 46 is addressed by an address counter 48 and the output $N_i$ of the EPROM 46 is fed into a timing counter 50 consisting of an 8-bit down counter. The timing counter 50 counts down from the programmed number $N_i$ at a frequency rate $f_{clock}$ determined by a crystal clock 51. The carry out bit from the timing counter 50 increments the address counter 48 and triggers a JK flip flop 52 which, via a line-select multiplexer (not shown) causes the driver 18 to switch the switching devices 10, 12 from their previous states.

It is evident that depending on $f_{clock}$, a number of consecutive voltage pulses at any frequency can be supplied in a time period so long as the period for which these voltage pulses are supplied satisfies the requirement in respect of time constant for setting up acoustic resonance. To set up acoustic resonance, voltage is supplied for a certain number of cycles at a given frequency. Hence, to avoid acoustic resonance the operating frequency is changed before the certain number of cycles has been executed. The rate at which the operating frequency is changed is determined, inter alia, by $f_{clock}$.

Alternatively, a similar succession of frequencies can be generated using an analogue circuit as shown in Figure 4. A voltage ramp waveform of a defined frequency, amplitude and DC offset is generated and applied to a sample and hold chip 54 which samples the magnitude of the ramp waveform perodically and the output of which is held at the voltage magnitude sampled for a certain period. The output of the sample and hold chip 54 is fed to a voltage controlled oscillator 56. By suitable selection of the sampling period, so that the voltage ramp waveform is sampled only twice during each ramp and the sampling period is greater than half the period of the ramp waveform, a succession of frequencies in the required predetermined order can be generated at the output of the voltage controlled oscillator 56 which, via a line-select multiplexer (not shown) causes the driver 18 to switch the switching devices 10, 12. The sampling period also determines the minimum period for which voltage can be supplied at any particular frequency and this is chosen to be less than the minimum time constant for setting up acoustic resonance at the frequencies of interest.

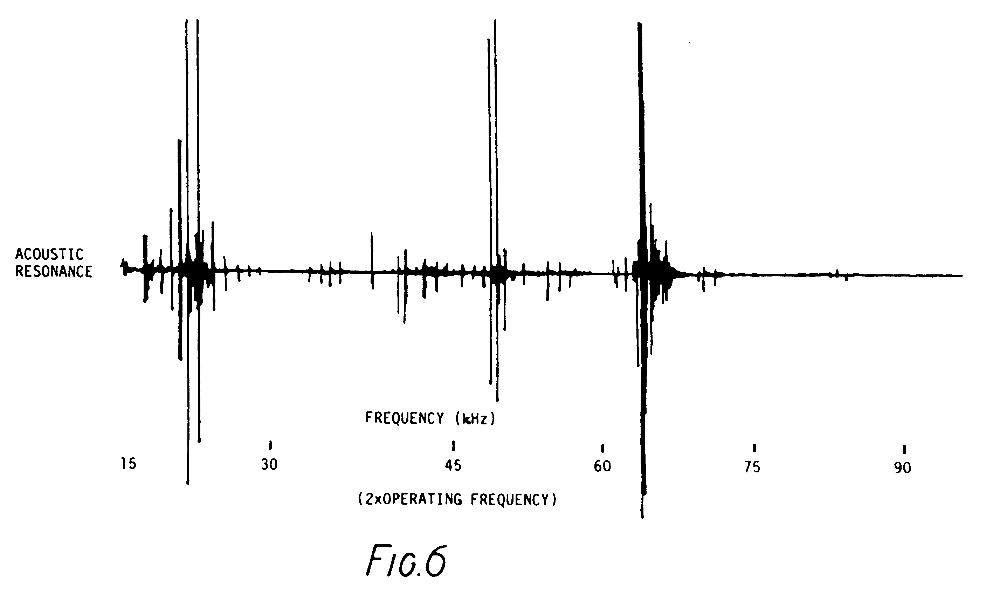

Figure 5 shows the starting circuit 6, comprising a typical thyristor fired ignitor, in greater detail. The circuit allows a capacitor 58 to charge up and then rapidly to discharge through the primary winding of a transformer 60. The voltage developed across the primary is coupled to the secondary winding which has a large turns ratio. The secondary is connected in series with a capacitor 61 across the lamp 2. Accordingly, large voltage spikes capable of breaking down the gas fill of the lamp can be generated across the lamp. These voltage spikes are superimposed on a voltage waveform having a run-up frequency as generated by the logic circuit and driver. The ballast inductor 22 (Figure 1) protects the switching devices 10, 12 from these large voltage spikes.

Once the lamp has been started, a current can flow in the lamp circuit. This is detected by a current sensor comprising a secondary winding (62, shown in Figure 2) placed on the ballast inductor 22. The output of the current sensor 62 causes the logic circuit to continue to produce the run-up frequency for a 12 second period. This run-up frequency has two functions; to reduce the failure rate of the circuit and to control the speed at which the lamp reaches full power. For an Arcstream lamp, the run-up frequency is typically 17.5kHz. The line-select multiplexer (mentioned previously) controls the output of the logic circuit to the driver 18 to determine if (a) the run-up frequency is produced; (b) the rotating diameter sequence (normal operation) is produced; or (c) if the circuit is switched off.

The output of the current sensor 62 can also be used during normal operation of the lamp. As a lamp ages, the voltage required across it increases. Accordingly, in order to maintain constant power operation (with the advantages of extended life, constant lamp colour through life and better colour matching of different lamps of the same type) the lamp current needs to be reduced. Reduction of lamp current can be achieved by increasing the midpoint of the operating range of frequencies used and so increasing the impedance of the ballast inductor 22.

As outlined hereinbefore, the frequency at which the lamp is operated is varied within a defined bandwidth, preferably having a magnitude of 2kHz or less for an Arcstream lamp. The optimum maximum and minimum frequencies of this bandwidth can be determined experimentally for any given type of lamp by determining the frequency ranges in which the effect of acoustic resonance for that type of lamp is at a minimum. Figure 6 shows an acoustic instability spectrum for an Arcstream lamp. The lamp was driven using a low frequency (500Hz) square wave on which was superimposed a high frequency sinusoidal signal of amplitude 5% that of the square wave. Acoustic resonance at the applied frequency is detected as a voltage fluctuation across the arc. The acoustic instability spectrum was accordingly derived by plotting the magnitude of the voltage fluctuation as a function of the superimposed frequency. It was found that for Arcstream lamps, the optimum operating frequency range was between 19 and 21kHz.

In any event, the bandwidth is chosen to be in a range which is a parameter of the electronic circuitry. The minimum frequency of this range is 15kHz as lower frequencies produce an audible hum. The maximum frequncy is, at present, 30kHz as higher frequencies are inefficient.

The inventors have operated Arcstream lamps by the method and power supply provided in accordance with the present invention for periods now in excess of 3000 hours. This in itself indicates that acoustic resonance has been reduced or eliminated to a sufficient degree for the lamps to be operated.

## Claims

1. A method of operating an arc discharge lamp comprising: supplying voltage to the lamp at a succession of (n+1) frequencies, wherein (n+1) is at least four, within a frequency bandwidth, the frequencies being $f_o......f_i, f_{i+1}......f_n$ with $f_{i+1} > f_i$, characterised in that the succession follows the predetermined order $f_o, f_{(m+1)}, f_1, f_{(m+2)},......, f_{(m-2)}, f_{(n-2)}, f_{(m-1)}, f_{(n-1)}, f_m, f_n$ where m=n/2 if n is even and m=(n+1)/2 if n is odd, thereby maximising the change between the frequencies of the succession and wherein the duration for which voltage is supplied at any one of the (n+1) frequencies of the succession is less than the time constant for setting up acoustic resonance at that frequency.

2. A method according to claim 1 wherein the succession of (n+1) frequencies is such that the time separation between periods in which the voltage is supplied at a given frequency is greater than the time constant for setting up acoustic resonance at that frequency.

3. A method according to either claim 1 or claim 2 wherein the frequency bandwidth has a magnitude of 5 kHz or less.

4. A method according to either claim 1 or claim 2 wherein the frequency bandwidth has a magnitude of 2 kHz or less.

5. A method according to any one of the preceding claims wherein the current input to the lamp is sensed.

6. A method according to claim 5 wherein the midpoint of the operating range of the bandwidth is controlled thereby to provide control of the current input of the lamp during normal operation of the lamp.

7. A power supply for an arc discharge lamp comprising:
   a drive circuit (18) for supplying voltage to the lamp;
   and means (8) for providing said voltage at a succession of (n+1) frequencies, wherein (n+1) is at least four, within a frequency bandwidth, the frequencies being $f_o......f_1, f_{(i+1)}......f_n$ with $f_{i+1} > f_i$, characterised

in that the succession follows the predetermined order $f_0$, $f_{(m+1)}$, $f_1$, $f_{(m+2)}$,......, $f_{(m-2)}$, $f_{(n-2)}$, $f_{(m-1)}$, $f_{(n-1)}$, $f_m$, $f_n$ where $m=n/2$ if $n$ is even and $m=(n+1)/2$ if $n$ is odd, thereby maximising the change between the frequencies of the succession and wherein the duration for which voltage is supplied at any one of the $(n+1)$ frequencies of the succession is less than the time constant for setting up acoustic resonance at that frequency.

8. A power supply according to claim 7 wherein the bandwidth has a magnitude of 5 kHz or less.

9. A power supply according to claim 7 wherein the bandwidth has a magnitude of 2 kHz or less.

10. A power supply according to claim 9 wherein the means (8) for providing said voltage at a succession of $(n+1)$ frequencies includes means (46) for storing a number corresponding to each of the $(n+1)$ frequencies, the numbers being stored so as to be output in the predetermined order.

## Patentansprüche

1. Verfahren zum Betrieb einer Bogenentladungslampe, umfassend: Zuführung einer Spannung zu der Lampe mit einer Folge von $(n+1)$ Frequenzen, bei der $(n+1)$ wenigstens vier ist, innerhalb einer Frequenz-Bandbreite, wobei die Frequenzen $f_0$ ... $f_i$, $f_{i+1}$ ... $f_n$ sind und $f_{i+1} > f_i$ ist, <u>dadurch gekennzeichnet,</u> daß die Folge die vorgegebene Reihenfolge $f_0$, $f_{(m+1)}$, $f_i$, $f_{(m+2)}$, ... $f_{(m-2)}$, $f_{(n-2)}$, $f_{m-1}$, $f_{(n-1)}$, $f_m$, $f_n$ hat, worin $m = n/2$, wenn $n$ gerade ist und $m = (n+1)/2$, wenn $n$ ungerade ist, um dadurch den Wechsel zwischen den Frequenzen der Folge zu maximieren, und daß die Dauer, während der die Spannung bei einer der $(n+1)$ Frequenzen der Folge zugeführt wird, kleiner als die Zeitkonstante für das Entstehen von akustischer Resonanz bei dieser Frequenz ist.

2. Verfahren nach Anspruch 1, bei dem die Folge der $(n+1)$ Frequenzen so ist, daß der Zeitabstand zwischen Perioden, in denen die Spannung bei einer gegebenen Frequenz zugeführt wird, größer als die Zeitkonstante für das Entstehen von akustischer Resonanz bei dieser Frequenz ist.

3. Verfahren nach Anspruch 1 oder 2, bei dem die Frequenz-Bandbreite eine Größe von 5 kHz oder weniger hat.

4. Verfahren nach Anspruch 1 oder 2, bei dem die Frequenz-Bandbreite eine Größe von 2 kHz oder weniger hat.

5. Verfahren nach einem der vorhergehenden Ansprüche, bei dem der Stromeingang zur Lampe gemessen wird.

6. Verfahren nach Anspruch 5, bei dem der Mittenpunkt des Arbeitsbereichs der Bandbreite gesteuert wird, um dadurch den Stromeingang der Lampe während des Normalbetriebs der Lampe zu steuern.

7. Stromversorgung für eine Bogenentladungslampe, umfassend:
   eine Treiberschaltung (18) zur Zuführung von Spannung zu der Lampe; und
   Mittel (8) zum Erzeugen der Spannung mit einer Folge von $(n+1)$ Frequenzen, bei der $(n+1)$ wenigstens vier ist, innerhalb einer Frequenz-Bandbreite, wobei die Frequenzen $f_0$ ... $f_i$, $f_{i+1}$, ... $f_n$ sind und $f_{i+1} > f_i$ ist, <u>dadurch gekennzeichnet,</u> daß die Folge die vorgegebene Reihenfolge $f_0$, $f_{(m+1)}$, $f_i$, $f_{(m+2)}$, ... $f_{(m-2)}$, $f_{(n-2)}$, $f_{m-1}$, $f_{(n-1)}$, $f_m$, $f_n$ hat, worin $m = n/2$, wenn $n$ gerade ist und $m = (n+1)/2$, wenn $n$ ungerade ist, um dadurch den Wechsel zwischen den Frequenzen der Folge zu maximieren, und daß die Dauer, während der die Spannung bei einer der $(n+1)$ Frequenzen der Folge zugeführt wird, kleiner als die Zeitkonstante für das Entstehen von akustischer Resonanz bei dieser Frequenz ist.

8. Stromversorgung nach Anspruch 7, bei der die Bandbreite eine Größe von 5 kHz oder weniger hat.

9. Stromversorgung nach Anspruch 7, bei der die Bandbreite eine Größe von 2 kHz oder weniger hat.

10. Stromversorgung nach Anspruch 9, bei der die Mittel (8) zur Erzeugung der Spannung mit einer Folge von $(n+1)$ Frequenzen Mittel (46) enthalten, um eine Zahl entsprechend jeder der $(n+1)$ Frequenzen zu speichern, wobei die Zahlen so gespeichert werden, daß sie in der vorgegebenen Reihenfolge ausgegeben werden.

**Revendications**

1. Procédé d'actionnement d'une lampe à décharge d'arc consistant à délivrer à la lampe une tension selon une suite constituée de (n+1) fréquences, où (n+1) est au moins égal à quatre, situées à l'intérieur d'une bande de fréquences, les fréquences étant égales à $f_0...f_i$, $f_{i+1}...f_n$ avec $f_{i+1} > f_i$, caractérisé en ce que la suite suit l'ordre prédéterminé $f_0$, $f_{(m+1)}$, $f_i$, $f_{(m+2)}$,..., $f_{(m-2)}$, $f_{(n-2)}$, $f_{(m-1)}$, $f_{(n-1)}$, $f_m$, $f_n$ où $m = n/2$ si n est pair et $m = (n+1)/2$ si n est impair, maximisant ainsi la variation entre les fréquences de la suite, et dans lequel la durée pendant laquelle une tension est délivrée selon l'une quelconque des (n+1) fréquences de la suite est inférieure à la constante de temps pour établir à cette fréquence la résonance acoustique.

2. Procédé selon la revendication 1, dans lequel la suite constituée des (n+1) fréquences est telle que l'intervalle de temps situé entre les périodes pendant lesquelles la tension est délivrée selon une fréquence donnée est plus important que la constante de temps pour établir à cette fréquence la résonance acoustique.

3. Procédé selon la revendication 1 ou 2, dans lequel la bande de fréquences a une largeur de 5 kHz ou moins.

4. Procédé selon la revendication 1 ou 2, dans lequel la bande de fréquences a une largeur de 2 kHz ou moins.

5. Procédé selon l'une quelconque des revendications précédentes, dans lequel le courant délivré à la lampe est détecté.

6. Procédé selon la revendication 5, dans lequel le point milieu de la plage de fonctionnement de la bande est commandé de manière à assurer une commande du courant d'entrée de la lampe pendant le fonctionnement normal de la lampe.

7. Alimentation électrique pour lampe à décharge d'arc comportant :
   un circuit d'alimentation (18) pour délivrer une tension à la lampe,
   et des moyens (8) pour délivrer ladite tension selon une suite constituée de (n+1) fréquences, où (n+1) est au moins égal à quatre, situées à l'intérieur d'une bande de fréquences, les fréquences étant égales à $f_0...f_i$, $f_{i+1}...f_n$ avec $f_{i+1} > f_i$, caractérisé en ce que la suite suit l'ordre prédéterminé $f_0$, $f_{(m+1)}$, $f_i$, $f_{(m+2)}$..., $f_{(m-2)}$, $f_{(n-2)}$, $f_{(m-1)}$, $f_{(n-1)}$, $f_m$, $f_n$ où $m = n/2$ si n est pair et $m = (n+1)/2$ si n est impair, maximisant ainsi la variation entre les fréquences de la suite, et dans lequel la durée pendant laquelle une tension est délivrée selon l'une quelconque des (n+1) fréquences de la suite est inférieure à la constante de temps pour établir à cette fréquence la résonance acoustique.

8. Alimentation électrique selon la revendication 7, dans laquelle la bande de fréquences a une largeur de 5 kHz ou moins.

9. Alimentation électrique selon la revendication 7, dans laquelle la bande de fréquence a une largeur de 2 kHz ou moins.

10. Alimentation électrique selon la revendication 9, dans laquelle les moyens (8) pour délivrer ladite tension selon une suite de (n+1) fréquences comportent des moyens (46) pour mémoriser un nombre correspondant à chacune des (n+1) fréquences, les nombres étant mémorisés de manière à être émis dans l'ordre prédéterminé.

340V
14

10

4

20    22

DRIVER
18

8

2

STARTING
CIRCUIT    6

12

OV
16

FIG.1

6    61

400V

58

60    2

ASTABLE

FIG.5

FIG.2

ADDRESS COUNTER *48*

*51*

CLOCK

EPROM *46*

TIMING COUNTER *50*

*52* J K

O/P

FIG.3

*54* SAMPLE & HOLD

VOLTAGE RAMP

*56*

O/P

VOLTAGE CONTROLLED
OSCILLATOR

FIG.4

FIG.6

ACOUSTIC RESONANCE

FREQUENCY (kHz)

15　30　45　60　75　90

(2xOPERATING FREQUENCY)

EP 0 397 334 B1